# EUROPÄISCHE PATENTSCHRIFT

(11) **EP 2 540 598 B1**
(45) Veröffentlichungstag und Bekanntmachung des Hinweises auf die Patenterteilung: **02.01.2019**
(21) Anmeldenummer: 12172736.6
(22) Anmeldetag: 20.06.2012
(51) Int. Cl.: B62D 33/02, B60J 5/06

(54) **Höhenverstellbarer Planenaufbau**
Height adjustable tarpaulin structure
Structure de bache réglable en hauteur

(30) Priorität: 29.06.2011 DE 102011107377
(43) Veröffentlichungstag der Anmeldung: 02.01.2013
(73) Patentinhaber: Schmitz Cargobull AG, 48341 Altenberge (DE)
(72) Erfinder: Derks, Roger Geradus Christiaan, 5922 Venlo (NL); Eikerling, Frank, 48149 Münster (DE)
(74) Vertreter: Cohausz & Florack

(56) Entgegenhaltungen:
- EP-A2- 0 263 082
- WO-A1-2010/112467
- DE-U1- 9 417 255
- FR-A1- 2 678 868

## Beschreibung

Die Erfindung betrifft einen Planenaufbau eines Nutzfahrzeugs mit einem Dach und einer Seitenwand, wobei die Seitenwand eine Seitenplane und wenigstens eine mit der Seitenplane verbundene Runge aufweist, wobei die Runge einen Rungenkörper und einen gegenüber dem Rungenkörper zur Verlängerung der Runge nach oben ausziehbaren Rungenschiebling aufweist, wobei sich im Verbindungsbereich zwischen dem Dach und der Seitenwand ein Holm längs zum Planenaufbau erstreckt und wobei der Rungenkörper über den Rungenschiebling am Holm gehalten ist.

Planenaufbauten von Nutzfahrzeugen, insbesondere Lastkraftwagen, Anhängern und Aufliegern, sind in unterschiedlichen Ausführungen bekannt. Sie zeichnen sich dadurch aus, dass wenigstens eine Seitenwand des Planenaufbaus durch eine Seitenplane verschlossen ist. Auf feste Seitenwände, wie bei sogenannten Kofferaufbauten, kann daher verzichtet werden. Das Dach wird bei Planenaufbauten wenigstens teilweise von sogenannten Rungen getragen, die sich in vertikaler Richtung vom Boden des Planenaufbaus bis zum Dach erstrecken. Man unterscheidet dabei sogenannte Eckrungen und Mittelrungen. Eckrungen sind in den Verbindungsbereichen zwischen den Seitenwänden und der Stirnwand bzw. der Rückwand, mithin an den vier Ecken (Kanten) des Planenaufbaus, vorgesehen, während Mittelrungen im Bereich der Seitenwand zwischen zwei Eckrungen vorgesehen sind. Die Mittelrungen tragen nicht nur das Dach, sondern können auch die Seitenwand stabilisieren. Dazu kann die Seitenplane mit einer oder weiteren Mittelrungen verbunden sein.

Eine besondere Bauform von Planenaufbauten sind die sogenannten Curtainsider, bei denen die Seitenplane in Längsrichtung des Nutzfahrzeugs aufgefahren werden kann. Dabei sind die Mittelrungen jedenfalls teilweise mit der Seitenplane verbunden. Beim Auffahren der Seitenplane beginnend von einem Längsende der Seitenwand werden die Mittelrungen in Längsrichtung des Planenaufbaus verschoben und die Seitenplane ziehharmonikaartig zusammengelegt. Dazu sind die Mittelrungen im Dach und im Boden des Planenaufbaus längsverschieblich gelagert.

Einige der bekannten Planenaufbauten, insbesondere der Curtainsider, sind höhenverstellbar ausgebildet. Dies bedeutet, dass das Dach von einer unteren Stellung in eine obere Stellung jeweils relativ zum Ladeboden des Planenaufbaus gebracht werden kann. Hierzu sind die Rungen längenveränderlich ausgebildet, um sich der Höhenverstellung des Dachs anzupassen. Die Höhenverstellung kann einer einfacheren Beladung des Nutzfahrzeugs dienen, wobei ein offener Spalt zwischen dem Dach und einer angrenzenden Seitenwand des Planenaufbaus toleriert werden kann. In anderen Fällen dient die Höhenverstellung dazu, das Nutzfahrzeug in zwei unterschiedlichen Höhen, den sogenannten Fahrstellungen, zu bewegen. Es sollte sich dabei kein Spalt zwischen dem Dach und der Seitenwand öffnen, wenn sich das Dach in der oberen Fahrstellung befindet, da dies aerodynamisch ungünstig ist und Feuchtigkeit in den Laderaum eindringen kann. Es reicht dann also nicht aus, die Rungen längenverschieblich auszubilden. Es müssen zusätzliche Maßnahmen getroffen werden, um den Planenaufbau in beiden Fahrstellungen geschlossen zu halten.

In der WO 2010/112467 A1 ist ein Planenaufbau beschrieben, bei dem die Seitenplane zum Zwecke der Höhenverstellung auf- und wieder abgerollt bzw. in Falten gelegt werden kann. Diese Lösungen sind jedoch entweder aufwändig und kostenintensiv oder aber aerodynamisch ungünstig. Ferner sind aus der EP 0 263 082 A2 und der DE 94 17 255 U1 Planenaufbauten der genannten Art bekannt, von denen die Erfindung ausgeht.

Daher liegt der vorliegenden Erfindung die Aufgabe zugrunde, den eingangs genannten und zuvor näher beschriebenen Planenaufbau derart auszugestalten und weiterzubilden, dass eine einfachere, kostengünstigere und aerodynamisch günstigere Höhenverstellung zwischen einer oberen und einer unteren Fahrstellung erreicht wird.

Diese Aufgabe ist bei einem Planenaufbau mit den Oberbegriffsmerkmalen des Anspruchs 1 dadurch gelöst, dass die Runge einen Planenhalter zur Fixierung der Seitenplane in einer geeigneten Position oberhalb des Rungenkörpers aufweist.

Die Erfindung hat erkannt, dass auf eine vertikale Längenveränderung der Seitenplane verzichtet werden kann, solange sichergestellt ist, dass die Seitenplane durch die Runge an ihrem oberen Ende in einer ausreichenden Höhe fixiert wird. Ausreichend ist die Höhe, wenn sich beim Verstellen des Dachs in die obere Fahrstellung kein Spalt bildet. Um dies auf einfache Art zu erreichen, wird die Runge mit einem entsprechenden Planenhalter versehen, der die Seitenplane derart fixiert, dass das obere Ende der Seitenplane auf einer Höhe oberhalb des Rungenkörpers gehalten ist.

In der oberen Fahrstellung des Dachs ist der Rungenschiebling gegenüber dem Rungenkörper ausgezogen. Wenn die Seitenplane auf der Höhe des Rungenkörpers enden würde, könnte darüber leicht ein Spalt zwischen dem Dach und der Seitenplane entstehen. Dies wird bei dem vorgeschlagenen Planenaufbau vermieden.

Der Planenhalter hält die Seitenplane in einer Höhe, die für den Betrieb des Planenaufbaus in der unteren Fahrstellung und in der oberen Fahrstellung ausreicht. Dadurch muss die Seitenplane beim Verstellen des Dachs von der unteren Fahrstellung in die obere Fahrstellung weder verkürzt noch verlängert werden. Weder in der unteren noch in der oberen Fahrstellung des Dachs tritt ein Spalt zwischen dem Dach und der Seitenplane auf. Es wird also weder die Lage des oberen Endes noch des unteren Endes der Seitenplane an die Höhe des Dachs angepasst, sondern die Verbindung zwischen dem Dach und der Seitenwand derart ausgebildet, dass das Dach und die Seitenwand in der oberen und der unteren Fahrstellung gegeneinander abgedichtet sind, um den Planenaufbau stets zu verschließen.

Wie hoch die Seitenplane durch den Planenhalter oberhalb des Rungenkörpers gehalten wird, ist davon abhängig, wie weit das Dach in der Höhe zwischen der unteren und der oberen Fahrstellung verstellt werden soll. Je weiter das Dach in der Höhe verstellt werden soll, desto höher über dem Rungenkörper sollte der Planenhalter die Seitenplane fixieren. Gleichzeitig müssen das Dach und die Seitenwand in ihrem Verbindungsbereich so aufeinander abgestimmt sein, dass der über den Rungenkörper überstehende Teil der Seitenplane die Stellung des Dachs auch in der unteren Fahrstellung nicht beeinträchtigt. Der dann in vertikaler Richtung "überschüssige" oder "überstehende" obere Teil der Seitenplane muss im Verbindungsbereich zwischen Dach und Seitenwand aufgenommen werden. Aus aerodynamischen Gründen soll nämlich vorzugsweise verhindert werden, dass die obere Kante der Seitenplane gegenüber der Oberseite des Dachs nach oben übersteht. Zudem soll das Verstellen des Dachs in die untere Fahrstellung nicht durch ein Absenken der Seitenplane insgesamt erreicht werden, die dann ggf. über den Boden des Planenaufbaus nach unten überstehen würde.

Der Planenhalter kann als eigenständiges Bauteil der Runge oder einstückig mit einem weiteren Bauteil der Runge, etwa dem Rungenschiebling oder Rungenkörper ausgebildet sein. Durch einen einstückigen Planenhalter kann die Montage der Runge vereinfacht werden. Durch einen separaten Planenhalter kann die Fertigung der einzelnen Rungenbauteile vereinfacht werden.

Für den Fall, dass die Runge teleskopierbar ausgebildet ist, kann ggf. schwer zwischen dem Rungenkörper und dem Rungenschiebling unterschieden werden. Der Rungenkörper wird dann als sich bis zu der Höhe erstreckend angesehen, in der die Mittel zum Befestigung der Runge am Holm vorgesehen sind, wenn sich das Dach in der unteren Fahrstellung befindet. Das obere Ende des Rungenkörpers kann alternativ maximal auf Höhe des unteren Endes des Holms angenommen werden, während sich das Dach in der unteren Fahrstellung befindet.

Bei einer ersten bevorzugten Ausgestaltung des Planenaufbaus ist der Planenhalter so an der Runge festgelegt, dass er bei Verlängerung der Runge, also beim Anheben des Dachs, ortsfest relativ zum Rungenkörper angeordnet bleibt. So kann die obere Positionierung der Seitenplane unabhängig davon vorgegeben werden, ob und inwieweit der Rungenschiebling gegenüber dem Rungenkörper ausgezogen ist. Grundsätzlich könnte der Planenhalter auch am Rungenschiebling vorgesehen sein. Dann müsste jedoch in aufwändigerer Weise dafür gesorgt werden, dass sich die vertikale Breite der Seitenplane zwischen der unteren Fahrstellung und der oberen Fahrstellung nicht oder nur unwesentlich verändert.

In diesem Zusammenhang oder auch alternativ kann es zweckmäßig sein, den Planenhalter mit dem Rungenkörper zu verbinden. Der Planenhalter und damit das obere Ende der Seitenplane können so problemlos in einer Höhe vorgesehen werden, die bezogen auf den Ladeboden des Planenaufbaus unabhängig vom Grad des Auszugs des Rungenschieblings gegenüber dem Rungenkörper bzw. davon ist, ob das Dach in der unteren Fahrstellung oder der oberen Fahrstellung angeordnet ist. Bedarfsweise kann es weiter bevorzugt sein, den Planenhalter einstückig mit dem Rungenkörper oder einem Teil des Rungenkörpers auszubilden, um die Anzahl der Rungeneinzelteile zu verringern und/oder deren Montage zu vereinfachen.

Konstruktiv einfach und dauerhaft kann die Fixierung der Seitenplane durch den Planenhalter in der gewünschten Höhe erfolgen, wenn der Planenhalter von unten in eine Tasche der Seitenplane eingreift. Auf diese Weise kann die Seitenplane am Planenhalter nicht nur in Schwerkraftrichtung, sondern bedarfsweise auch in horizontaler Richtung festgelegt werden. Außerdem kann der Planenhalter dann einfach als vom Rungenkörper nach oben vorstehendes Paddel ausgebildet werden. Alternativ kann die Seitenplane zur Fixierung in der gewünschten Höhe mit dem Planenhalter verklebt, verschraubt oder vernietet sein.

Zusätzlich oder alternativ kann der Planenhalter so ausgebildet sein, dass er eine im Wesentlichen vertikale Anlagefläche für die Seitenplane bereitstellt. Dies kann ebenfalls recht einfach erreicht werden, wenn der Planenhalter als Paddel ausgebildet ist. Die Anlagefläche für die Seitenplane kann dazu dienen, deren Lage zu definieren und so ein Eindringen von Feuchtigkeit über die obere Kante der Seitenplane in den Laderaum des Planenaufbaus zu vermeiden.

Zur Abdichtung des Laderaums gegen Feuchtigkeit und bedarfsweise zusätzlich gegen Fahrtwind, kann eine sich in Längsrichtung der Seitenwand erstreckende, vorzugsweise als Dichtlippe ausgebildete, Dichtung im oberen Bereich der Seitenplane vorgesehen sein. Da sowohl in der unteren Fahrstellung als auch in der oberen Fahrstellung eine solche Abdichtung gewünscht ist, kann die Dichtung in der oberen und der unteren Fahrstellung in entsprechender Weise vorgesehen sein. Auf eine Mehrzahl von Dichtungen kann so verzichtet werden. Bedarfsweise kann die Dichtlippe die obere Kante der Seitenplane übergreifen und/oder umgreifen.

Konstruktiv einfach und wirkungsvoll ist es, wenn die, vorzugsweise als Dichtlippe ausgebildete, Dichtung seitlich des Planenhalters dichtend an der Seitenplane anliegt. Dabei kann die Dichtung seitlich der Anlagefläche des Planenhalters an der Seitenplane dichtend anliegen. So kann die Seitenplane dichtend zwischen der Anlagefläche des Planenhalters und der Dichtung aufgenommen sein.

Um die Dichtwirkung der, vorzugsweise als Dichtlippe ausgebildeten oder eine Dichtlippe aufweisenden, Dichtung zu erhöhen, kann die Dichtung gegen den Planenhalter vorgespannt sein. So kann sichergestellt werden, dass die Dichtung die Seitenplane gegen die Anlagefläche des Planenhalters drückt. Feuchtigkeit und bedarfsweise auch Fahrtwind können so nicht in den Planenaufbau gelangen.

Die Dichtung, die vorzugsweise als Dichtlippe ausgebildet ist, kann konstruktiv einfach am Holm festgelegt sein. So wird erreicht, dass die Dichtung den Verbindungsbereich zwischen dem Dach und der Seitenwand des Planenaufbaus abdichten kann, egal ob das Dach in der oberen oder der unteren Fahrstellung positioniert ist. Die Dichtung kann so nämlich im Wesentlichen ortsfest relativ zum Dach vorgesehen sein.

Um die obere Kante der Seitenplane problemlos hinter der Dichtung, vorzugsweise der Dichtlippe, aufnehmen und die Dichtlippe alternativ oder zusätzlich einfach vorspannen zu können, kann die Dichtung um eine Achse parallel zum Holm schwenkbar gelagert sein. Zum Zwecke der Vorspannung kann die Dichtung federbelastet oder einfach entsprechend elastisch verformt sein. Die Dichtung besteht unter anderem deswegen vorzugsweise aus einem Kunststoff, insbesondere Gummi.

Der Planenhalter kann so ausgebildet sein, dass er in einer unteren Fahrstellung des Dachs in den Bereich seitlich des Holms eingreift. Die überschüssige vertikale Breite der Seitenplane kann so im Bereich des Holms aufgenommen werden, ohne dass die Seitenplane gegenüber dem Dach nach oben vorsteht bzw. gekürzt oder gestaucht werden muss. Besonders zweckmäßig kann der Planenhalter teilweise zwischen dem Holm und der Dichtung vorgesehen sein und den oberen Bereich der Seitenplane dort fixieren. So kann gleichzeitig die Aufnahme der in der unteren Fahrstellung überschüssigen vertikalen Breite der Seitenplane dichtend aufgenommen werden.

Besonders zweckmäßig ist es, wenn die wenigstens eine Runge eine Mittelrunge ist oder durch mehrere Mittelrungen gebildet wird. So kann problemlos ein höhenverstellbarer Planenaufbau in Form eines Curtainsiders bereitgestellt werden. In diesem Zusammenhang ist es für das Handhaben der Seitenwand bevorzugt, wenn die Rungen in Form von Mittelrungen längsverschiebbar im Holm gehalten sind. Alternativ kann auch nur eine Mittelrunge vorgesehen sein und/oder kann ein anderer Planenaufbau als ein Curtainsider vorgesehen sein. Zudem kann auf die beschriebene Art neben der wenigstens einen Mittelrunge auch wenigstens eine Eckrunge ausgebildet sein.

Dabei ist es grundsätzlich bevorzugt, wenn der Rungenkörper längsverschiebbar am Boden des Planenaufbaus gehalten ist. Der Rungenkörper kann dann beispielsweise beim Öffnen des Planenaufbaus beiseite geschoben werden.

Vorteilhafte Wirkungen, wie die Vergrößerung des Ladevolumens oder die Verringerung des Luftwiderstands, werden bereits durch eine geringe Höhenverstellung des Dachs des Planenaufbaus erreicht. Je ausgeprägter die Höhenverstellung ist, desto aufwändiger ist die Sicherstellung eines stets geschlossenen Verbindungsbereichs zwischen dem Dach und der Seitenwand des Planenaufbaus. Im Ergebnis ist es daher bevorzugt, wenn der Rungenschiebling gegenüber dem Rungenkörper bei geschlossener Seitenwand um wenigstens 50 mm, vorzugsweise um wenigstens 100 mm, insbesondere um wenigstens 150 mm, ausgezogen werden kann bzw. höhenverstellbar ausgebildet ist.

Um ein Eindringen von Feuchtigkeit zuverlässig zu vermeiden, und zwar auch bei schneller Fahrt des Nutzfahrzeugs und zwischen zwei Rungen, kann die Seitenplane seitlich des Planenhalters einen sich in Längsrichtung der Seitenplane erstreckenden Planenstreifen aufweisen. Der Planenstreifen ist dann im oberen Bereich dicht mit der Seitenplane verbunden und weist im unteren Bereich ein nach unten weisendes freies Ende bzw. loses Ende auf. Von unten zwischen der Dichtung und der Seitenplane eindringende Feuchtigkeit gelangt so lediglich in den nach oben geschlossenen Zwischenraum zwischen der Seitenplane und dem Planenstreifen. Es versteht sich dabei, dass der Planenstreifen vorzugsweise aus Planenmaterial gefertigt sein kann, aber nicht muss.

Vorliegend kann das Dach des Planenaufbaus auch in eine Position oberhalb der oberen Fahrstellung verstellt werden. Es handelt sich dann um eine Beladestellung, die den Zugang zum Laderaum des Planenaufbaus erleichtert. Das Verfahren des Planenaufbaus ist bei dieser Position des Dachs jedoch nicht vorgesehen, so dass in dieser Beladestellung ein Zwischenraum oder Spalt zwischen der Seitenwand und dem Dach auftreten kann. Das Eindringen von Feuchtigkeit ist in diesem Fall unkritisch, da beim Beladen auch auf andere Weise Feuchtigkeit eindringen kann. Ferner können zwischen der unteren und der oberen Fahrstellung noch weitere mittlere Fahrstellungen des Dachs vorgesehen sein. Die Ausführungen zur oberen und unteren Fahrstellung bleiben davon aber vorzugsweise unberührt.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Planenaufbau in perspektivischer Ansicht,
- Fig. 2: den Planenaufbau aus Fig. 1 mit der Seitenwand in einer geöffneten Stellung in einer Seitenansicht,
- Fig. 3: die Seitenwand aus Fig. 2 in einer unteren Fahrposition des Dachs in einem vertikalen Schnitt,
- Fig. 4: die Seitenwand aus Fig. 2 in einer oberen Fahrposition des Dachs in einem vertikalen Schnitt,
- Fig. 5: ein Detail einer Runge in perspektivischer Ansicht und
- Fig. 6: ein Detail der Seitenwand aus Fig. 2 im Bereich des Holms.

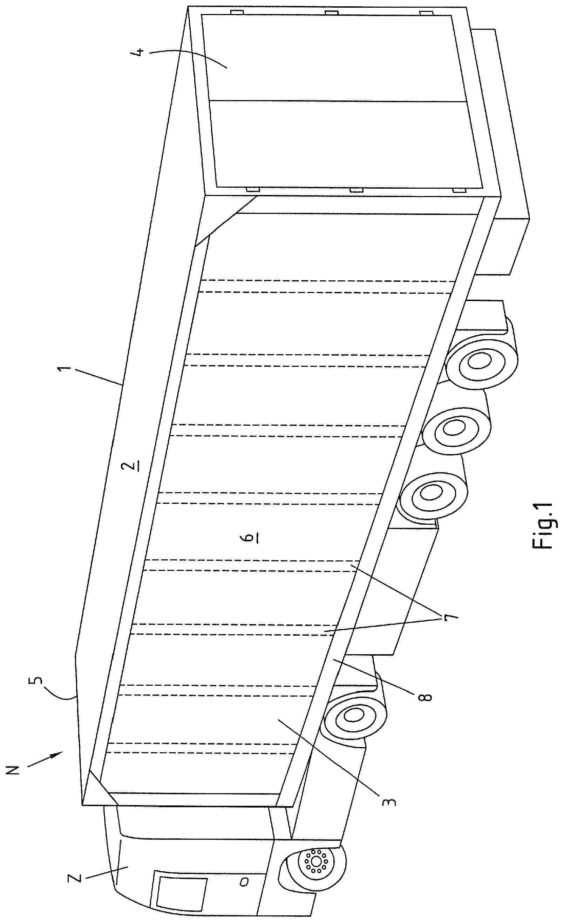

In der Fig. 1 ist ein Nutzfahrzeug N in Form eines von einer Zugmaschine Z gezogenen Aufliegers dargestellt, der einen als Curtainsider ausgebildeten Planenaufbau 1 trägt. Der dargestellte und insoweit bevorzugte Planenaufbau 1 weist ein Dach 2 und zwei Seitenwände 3 auf. Ferner sind noch eine Rückwand 4 und eine Stirnwand 5 vorgesehen. Das Dach 2 wird durch eine Gerüststruktur gebildet und mittels einer Dachplane verschlossen. Die Seitenwände 3 sind durch Seitenplanen 6 verschlossen, die durch eine Reihe von Rungen 7 gestützt werden, welche ihrerseits das Dach 2 stützen. Die Rückwand 4 wird beim dargestellten und insoweit bevorzugten Planenaufbau 1 im Wesentlichen durch zwei Rückwandtüren gebildet. Auch die Stirnwand 5 ist massiv, jedoch ohne Türen ausgebildet. Nach unten wird der Planenaufbau 1 von einem Boden 8 abgeschlossen, dessen Oberseite den Ladeboden 9 des innerhalb des Planenaufbaus 1 befindlichen Laderaums bildet.

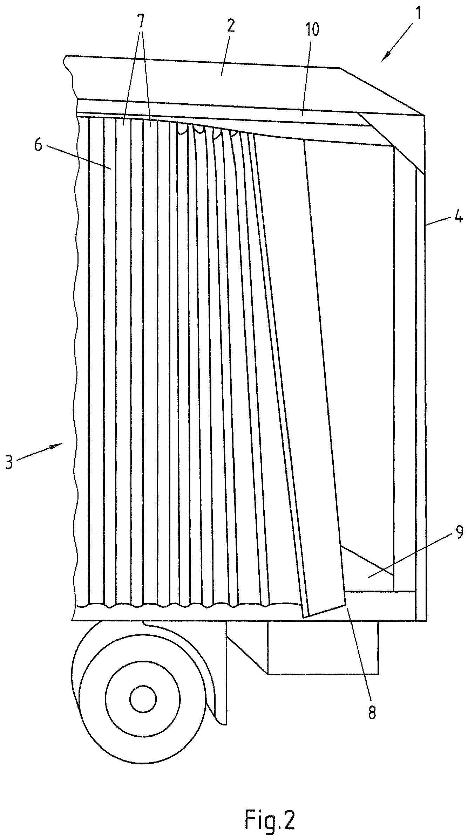

In der Fig. 2 ist der Planenaufbau 1 der Fig. 1 in einer Seitenwand 3 in einer geöffneten Stellung dargestellt. Zum Öffnen der Seitenwand 3 wird die Seitenplane 6 in Richtung einer der beiden Längsenden der Seitenwand 3 verschoben. Die Seitenplane 6 ist dazu mit einer Mehrzahl von in regelmäßigen Abständen angeordneten Rungen 7 verbunden. Die Rungen 7 sind einerseits mit einem im Verbindungsbereich zwischen Dach 2 und Seitenwand 3 vorgesehenen Holm 10 und andererseits mit dem Boden 8 des Planenaufbaus 1 verbunden, und zwar jeweils in Längsrichtung verschiebbar. So kann die Seitenwand 3 durch Aufschieben der Rungen 7 geöffnet und der Laderaum für eine Be- oder Entladung zugänglich gemacht werden. Die Rungen 7 sind sowohl im Holm 10 als auch am Boden 8 in entsprechenden Laufschienen 11, 12 gehalten, in denen die Rungen 7 in Längsrichtung des Planenaufbaus 1 verschoben werden können. Im aufgeschobenen Zustand der Seitenplane 6 ist diese zumindest bereichsweise ziehharmonikaartig zusammengefaltet.

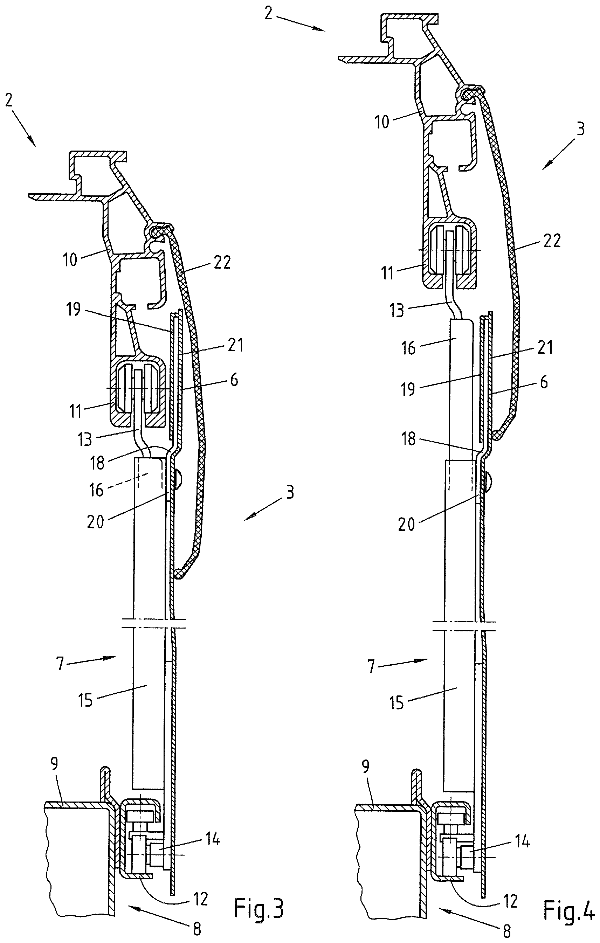

In der Fig. 3 ist ein vertikaler Schnitt durch die Seitenwand 3 des Planenaufbaus 1 dargestellt. Der Einfachheit halber ist vom Verbindungsbereich zwischen dem Dach 2 und der Seitenwand 3 lediglich der längs zur Seitenwand 3 verlaufende Holm 10 dargestellt. Insbesondere die Dachplane und deren Befestigung sind nicht dargestellt. Der Holm 10 ist als Hohlprofil mit einer Laufschiene 11 am unteren Ende vorgesehen. In die Laufschiene 11 greift von unten ein Schlitten 13 einer Runge 7 ein, der Laufrollen aufweist, die entlang der Laufschiene 11 abrollen. An der Außenseite des Bodens 8 ist ebenfalls eine Laufschiene 12 vorgesehen, in die ein weiterer Schlitten 14 der Runge 7 eingreift. Auch dieser Schlitten 14 weist Laufrollen auf, die entlang der Laufschiene 14 des Bodens 8 abrollen. Auf diese Weise kann die Runge 7 längs des Holms 10 verschoben werden, um die Seitenwand 3 zu öffnen und den Laderaum zum Be- oder Entladen freizugeben.

Die Runge 7 ist zwischen den beiden Schlitten 13,14 am Holm 10 und am Boden 8 des Planenaufbaus 1 in einen unteren Rungenkörper 15 und einen Rungenschiebling 16 unterteilt. Der Rungenkörper 15 ist fest mit dem unteren Schlitten 14 verbunden. Der Rungenschiebling 16 ist fest mit dem oberen Schlitten 13 verbunden. Zudem ist der Rungenschiebling 16 so mit dem Rungenkörper 15 verbunden, dass der Rungenschiebling 16 gegenüber dem Rungenkörper 15 ausgezogen werden kann. Auf diese Weise ergibt sich eine längenverstellbare Runge 7.

Bei der dargestellten und insoweit bevorzugten Runge 7 ist der Rungenschiebling 16 in den Rungenkörper 15 eingeschoben. Der Rungenschiebling 16 ist dabei relativ zum Rungenkörper 15 in diesem in zwei unterschiedlichen Positionen arretierbar. Es ergeben sich somit je nach Arretierung des Rungenschieblings 16 im Rungenkörper 15 zwei unterschiedliche Längen der Runge 7 insgesamt. Die geringere Rungenlänge entspricht der Rungenlänge in der in der Fig. 3 dargestellten, unteren Fahrstellung des Dachs 2 und die größere Rungenlänge entspricht der Rungenlänge in der in der Fig. 4 dargestellten, oberen Fahrstellung des Dachs 2. Bei der dargestellten Runge 7 wird der Rungenschiebling 16 über einen Steckbolzen 17 in der gewünschten Höhe im Rungenkörper 15 gesichert. Es kommen aber auch andere Arretiermöglichkeiten in Betracht.

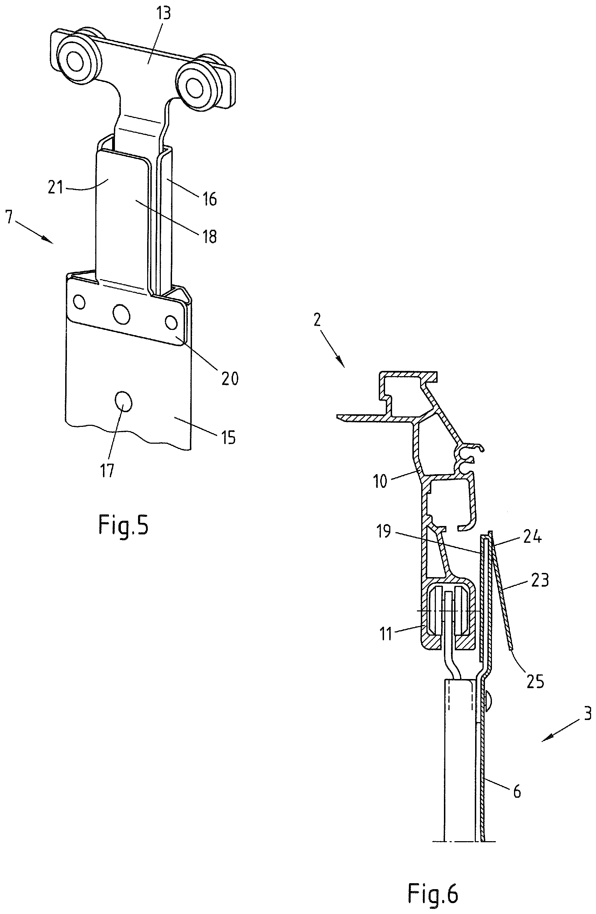

Am Rungenkörper 15 festgelegt ist ein Planenhalter 18, der von unten in eine Tasche 19 der Seitenplane 6 eingreift. Der Planenhalter 18 erstreckt sich über das obere Ende des Rungenkörpers 15 hinaus nach oben und fixiert das obere Ende der Seitenplane 6 in einer Position, die höher angeordnet ist als das obere Ende des Rungenkörpers 15. Da die Tasche 19 mit ihrem oberen Ende auf dem Planenhalter 18 aufsitzt, kann die Seitenplane 6 nicht weiter nach unten gelangen. Nicht im Einzelnen dargestellt ist, dass die Taschenbreite in etwa der Breite des Planenhalters 18 in horizontaler Längsrichtung der Seitenwand 3 entspricht. Demnach ist die Seitenplane 6 auch in den entsprechenden horizontalen Richtungen gegenüber der Runge 7 festgelegt und die Seitenplane 6 kann einfach durch Verschieben der Rungen 7 geöffnet werden. Der Planenhalter 18 ist in Fig. 5 perspektivisch dargestellt. Der Planenhalter 18 ist im Wesentlichen flach und etwa so breit wie die Runge 7 ausgebildet.

Bei der dargestellten und insoweit bevorzugten Runge 7 erstreckt sich der Planenhalter 18 bis in den Verbindungsbereich zwischen dem oberen Schlitten 13 und dem Rungenschiebling 16. Ferner ist bei dieser Runge 7 der Planenhalter 18 als Blechteil ausgebildet. Der Planenhalter 18 weist am unteren Ende einen Montageabschnitt 20 zur Montage mit dem Rungenkörper 15 auf. Darüber bildet der Planenhalter 18 eine im Wesentlichen vertikale Anlagefläche 21 für die Seitenplane 6.

Am Holm 10 ist neben der Runge 7 auch eine Dichtlippe 22 gehalten, die um die obere Kante der Seitenplane 6 herum greift und an der Außenseite der Seitenplane 6 anliegt. Die Dichtlippe 22 ist in der dargestellten unteren Fahrstellung gegen den Rungenkörper 15 vorgespannt, und zwar durch eine leichte elastische Deformierung der Dichtlippe 22 im Bereich der Verbindung mit dem Holm 10. Die Dichtlippe 22 drückt also mit ihrem unteren Ende gegen die Seitenplane 6 und diese gegen den Rungenkörper 15.

Der Planenhalter 18 greift mitsamt eines von ihm gehaltenen oberen Bereichs der Seitenplane 6 in einen Bereich seitlich des Holms 10 und zwischen dem Holm 10 einerseits und der Dichtlippe 22 andererseits ein. Der in der unteren Fahrstellung "überschüssige" obere Teil der Seitenplane 6 wird also in diesem Bereich aufgenommen, ohne dass dies den Verbindungsbereich zwischen dem Dach 2 und der Seitenwand 3 beeinträchtigt.

Der vom Planenhalter 18 in einer Höhe oberhalb des Rungenkörpers 15 gehaltene Teil der vertikalen Breite der Seitenplane 6 ist für die obere Fahrstellung des Dachs 2 erforderlich, damit zwischen dem Dach 2 und der Seitenwand 3 bzw. im Verbindungsbereich zwischen dem Dach 2 und der Seitenwand 3 kein Spalt entsteht, über den Feuchtigkeit oder Fahrtwind eindringen könnten. Wird der Rungenschiebling 16 gegenüber dem Rungenkörper 15 ausgefahren, bis die Runge 7 die für die obere Fahrstellung benötigte Länge aufweist, gelangt der von dem Planenhalter 18 gegenüber dem Rungenkörper 15 hochgehaltene Teil der Seitenplane 6 in einen Bereich neben den Rungenschiebling 16. Dieser Teil der Seitenplane 6 verschließt einerseits den vertikalen Versatz zwischen der Dichtlippe 22 und dem oberen Ende des Rungenkörpers 15. Zudem ist ein Teil der Seitenplane 6 zwischen dem Rungenschiebling 16 und der Dichtlippe 22 vorgesehen. Die Dichtlippe 22 drückt dabei wiederum unter Vorspannung gegen die Seitenplane 6 in diesem Bereich und so die Seitenplane 6 letztlich gegen die Anlagefläche 21 des Planhalters 18 für die Seitenplane 6. Das Eindringen von Feuchtigkeit und Fahrtwind wird so vermieden.

In der Fig. 6 ist ein Detail des oberen Randes der Seitenplane 6 dargestellt. Es handelt sich dabei um einen Planenstreifen 23, der sich längs der Seitenplane 6 erstreckt und in seinem oberen Ende 24 feuchtigkeitsundurchlässig mit der Seitenplane 6 verbunden ist. Das freie untere Ende 25 des Planenstreifens 23 ist nicht mit der Seitenplane 6 verbunden. Bei dem dargestellten und insoweit bevorzugten Planenstreifen 23 ist vorgesehen, dass das untere Ende des Planenstreifens 23 etwas von der Seitenplane 6 nach außen absteht. Wenn also Feuchtigkeit zwischen der sich längs der gesamten Seitenwand 3 erstreckenden Dichtlippe 22 und der Seitenplane 6 hindurch nach oben gelangen kann, gelangt diese Feuchtigkeit in den Zwischenraum zwischen der Seitenplane 6 und dem Planenstreifen 23. Dadurch wird die Feuchtigkeit zuverlässig daran gehindert, in den Laderaum des Planenaufbaus 1 einzudringen.

## Patentansprüche

1. Planenaufbau (1) eines Nutzfahrzeugs (N) mit einem Dach (2) und einer Seitenwand (3), wobei die Seitenwand (3) eine Seitenplane (6) und wenigstens eine mit der Seitenplane (6) verbundene Runge (7) aufweist, wobei die Runge (7) einen Rungenkörper (15) und einen gegenüber dem Rungenkörper (15) zur Verlängerung der Runge (7) nach oben ausziehbaren Rungenschiebling (16) aufweist, wobei sich im Verbindungsbereich zwischen dem Dach (2) und der Seitenwand (3) ein Holm (10) längs zum Planenaufbau (1) erstreckt, wobei der Rungenkörper (15) über den Rungenschiebling (16) am Holm (10) gehalten ist und wobei die Runge (7) einen Planenhalter (18) zur Fixierung der Seitenplane (6) in einer Position oberhalb des Rungenkörpers (15) aufweist,
**dadurch gekennzeichnet, dass**
der Planenhalter (18) bei Verlängerung der Runge (7) ortsfest relativ zum Rungenkörper (15) vorgesehen ist.

2. Planenaufbau nach Anspruch 1,
**dadurch gekennzeichnet, dass**
der Planenhalter (18) mit dem Rungenkörper (15) verbunden ist.

3. Planenaufbau nach Anspruch 1 oder 2,
**dadurch gekennzeichnet, dass**
der Planenhalter (18) von unten in eine Tasche (19) der Seitenplane (6) eingreift.

4. Planenaufbau nach einem der Ansprüche 1 bis 3,
**dadurch gekennzeichnet, dass**
der Planenhalter (18) eine im Wesentlichen vertikale Anlagefläche (21) für die Seitenplane (6) aufweist.

5. Planenaufbau nach einem der Ansprüche 1 bis 4,
**dadurch gekennzeichnet, dass**
eine sich in Längsrichtung der Seitenwand (3) erstreckende Dichtlippe (22) zum Abdichten der Seitenwand (3) im oberen Bereich der Seitenplane (6) vorgesehen ist.

6. Planenaufbau nach Anspruch 5,
**dadurch gekennzeichnet, dass**
die Dichtlippe (22), vorzugsweise in einer oberen Fahrstellung, seitlich des Planenhalters (18), vorzugsweise seitlich der Anlagefläche (21) des Planenhalters (18), dichtend an der Seitenplane (6) anliegt.

7. Planenaufbau nach Anspruch 6,
**dadurch gekennzeichnet, dass**
die Dichtlippe (22) gegen die Runge und/oder den Planenhalter (18) vorgespannt ist.

8. Planenaufbau nach einem der Ansprüche 5 bis 7,
**dadurch gekennzeichnet, dass**
die Dichtlippe (22) am Holm (10) festgelegt ist.

9. Planenaufbau nach einem der Ansprüche 5 bis 8,
**dadurch gekennzeichnet, dass**
die Dichtlippe (22) um eine Achse parallel zum Holm (10) schwenkbar gelagert ist.

10. Planenaufbau nach einem der Ansprüche 1 bis 9,
**dadurch gekennzeichnet, dass**
der Planenhalter (18) in einer unteren Fahrstellung des Dachs (2) in den Bereich seitlich des Holms (10), vorzugsweise zwischen dem Holm (10) und der Dichtung (22), eingreift und die Seitenplane (6) dort fixiert.

11. Planenaufbau nach einem der Ansprüche 1 bis 10,
**dadurch gekennzeichnet**, das s
der Rungenschiebling (16) längsverschiebbar im Holm (10) gehalten ist.

12. Planenaufbau nach einem der Ansprüche 1 bis 11,
**dadurch gekennzeichnet, dass**
der Rungenkörper (15) längsverschiebbar am Boden (8) des Planenaufbaus (1) gehalten ist.

13. Planenaufbau nach einem der Ansprüche 1 bis 12,
**dadurch gekennzeichnet, dass**
das Dach (2) durch Ausziehen des Rungenschieblings (16) gegenüber dem Rungenkörper (15) bei geschlossener Seitenwand (3) um wenigstens 50 mm, vorzugsweise wenigstens 100 mm, höhenverstellbar ist.

14. Planenaufbau nach einem der Ansprüche 1 bis 13,
**dadurch gekennzeichnet, dass**
die Seitenplane (6) seitlich des Planenhalters (18), vorzugsweise zwischen dem Planenhalter (18) und der Dichtlippe (22), einen sich in Längsrichtung der Seitenplane (6) erstreckenden Planenstreifen (23) aufweist, dass der Planenstreifen (23) im oberen Bereich dichtend mit der Seitenplane (6) verbunden ist und dass der Planenstreifen (23) im unteren Bereich ein nach unten weisendes freies Ende (25) aufweist.

## Claims

1. Tarpaulin superstructure (1) of a commercial vehicle (N) having a roof (2) and a side wall (3), wherein the side wall (3) has a side curtain (6) and at least one stanchion (7) connected to the side curtain (6), wherein the stanchion (7) has a stanchion body (15) and a stanchion sliding unit (16) that can be extended upwards with respect to the stanchion body (15) in order to lengthen the stanchion (7), wherein a strut (10) extends longitudinally in relation to the tarpaulin superstructure (1) in the connecting region between the roof (2) and the side wall (3), wherein the stanchion body (15) is held on the strut (10) by the stanchion sliding unit (16) and wherein the stanchion (7) has a tarpaulin holder (18) for fixing the side curtain (6) in a position above the stanchion body (15),
**characterised in that**
the tarpaulin holder (18) is provided so as to be immovable relative to the stanchion body (15) during lengthening of the stanchion (7).

2. Tarpaulin superstructure according to Claim 1,
**characterised in that**
the tarpaulin holder (18) is connected to the stanchion body (15).

3. Tarpaulin superstructure according to Claim 1 or 2,
**characterised in that**
the tarpaulin holder (18) engages from below in a pocket (19) of the side curtain (6).

4. Tarpaulin superstructure according to any one of Claims 1 to 3,
**characterised in that**
the tarpaulin holder (18) has a substantially vertical contact surface (21) for the side curtain (6).

5. Tarpaulin superstructure according to any one of Claims 1 to 4,
**characterised in that**
a sealing lip (22) extending in the longitudinal direction of the side wall (3) is provided for sealing the side wall (3) in the upper region of the side curtain (6).

6. Tarpaulin superstructure according to Claim 5,
**characterised in that**
the sealing lip (22), preferably in an upper drive position, to the side of the tarpaulin holder (18), preferably to the side of the contact surface (21) of the tarpaulin holder (18), rests on the side curtain (6) with a sealing action.

7. Tarpaulin superstructure according to Claim 6,
**characterised in that**
the sealing lip (22) is pre-tensioned against the stanchion and/or the tarpaulin holder (18).

8. Tarpaulin superstructure according to any one of Claims 5 to 7,
**characterised in that**
the sealing lip (22) is fixed to the strut (10).

9. Tarpaulin superstructure according to any one of Claims 5 to 8,
**characterised in that**
the sealing lip (22) is pivotally mounted about an axis parallel to the strut (10).

10. Tarpaulin superstructure according to any one of Claims 1 to 9,
**characterised in that**
in a lower drive position of the roof (2), the tarpaulin holder (18) engages in the region to the side of the strut (10), preferably between the strut (10) and the seal (22), and fixes the side curtain (6) there.

11. Tarpaulin superstructure according to any one of Claims 1 to 10,
**characterised in that**
the stanchion sliding unit (16) is held in the strut (10) so as to be longitudinally displaceable.

12. Tarpaulin superstructure according to any one of Claims 1 to 11,
**characterised in that**
the stanchion body (15) is held on the bottom (8) of the tarpaulin superstructure (1) so as to be longitudinally displaceable.

13. Tarpaulin superstructure according to any one of Claims 1 to 12,
**characterised in that**
the roof (2) is height-adjustable by at least 50 mm, preferably at least 100 mm, when the side curtain (3) is closed by extending the stanchion sliding unit (16) with respect to the stanchion body (15).

14. Tarpaulin superstructure according to any one of Claims 1 to 13,
**characterised in that**
the side curtain (6) to the side of the tarpaulin holder (18), preferably between the tarpaulin holder (18) and the sealing lip (22), has a tarpaulin strip (23) extending in the longitudinal direction of the side curtain (6), **in that** the tarpaulin strip (23) is connected to the side curtain (6) in the upper region with a sealing action and **in that** in the lower region the tarpaulin strip (23) has a downwardly pointing free end (25).

## Revendications

1. Caisse bâchée (1) d'un véhicule utilitaire (N), comprenant un toit (2) et une paroi latérale (3), la paroi latérale (3) possédant une bâche latérale (6) et au moins un montant (7) relié à la bâche latérale (6), le montant (7) possédant un corps de montant (15) et un élément coulissant de montant (16) extensible vers le haut par rapport au corps de montant (15) en vue d'allonger le montant (7), un longeron (10) s'étendant dans le sens longitudinal par rapport à la caisse bâchée (1) dans la zone de liaison entre le toit (2) et la paroi latérale (3), le corps de montant (15) étant maintenu au longeron (10) par le biais de l'élément coulissant de montant (16) et le montant (7) possédant une monture de bâche (18) servant à la fixation de la bâche latérale (6) dans une position au-dessus de le corps de montant (16),
**caractérisée en ce que**
la monture de bâche (18) est conçue pour être fixe par rapport au corps de montant (15) lors de l'allongement du montant (7).

2. Caisse bâchée selon la revendication 1,
**caractérisée en ce que**
la monture de bâche (18) est reliée au corps de montant (15).

3. Caisse bâchée selon la revendication 1 ou 2,
**caractérisée en ce que**
la monture de bâche (18) vient en prise par le dessous dans une poche (19) de la bâche latérale (6).

4. Caisse bâchée selon l'une des revendications 1 à 3,
**caractérisée en ce que**
la monture de bâche (18) possède une surface d'appui (21) sensiblement verticale pour la bâche latérale (6).

5. Caisse bâchée selon l'une des revendications 1 à 4,
**caractérisée en ce**
**qu'**une lèvre d'étanchéité (22) qui s'étend dans le sens longitudinal de la paroi latérale (3) est présente pour réaliser l'étanchéité de la paroi latérale (3) dans la zone supérieure de la bâche latérale (6).

6. Caisse bâchée selon la revendication 5,
**caractérisée en ce que**
la lèvre d'étanchéité (22), de préférence dans une position de déplacement haute, repose de manière étanche contre la bâche latérale (6), latéralement à la monture de bâche (18), de préférence latéralement à la surface d'appui (21) de la monture de bâche (18).

7. Caisse bâchée selon la revendication 6,
**caractérisée en ce que**
la lèvre d'étanchéité (22) est précontrainte contre le montant et/ou la monture de bâche (18).

8. Caisse bâchée selon l'une des revendications 5 à 7,
**caractérisée en ce que**
la lèvre d'étanchéité (22) est fixée au longeron (10).

9. Caisse bâchée selon l'une des revendications 5 à 8,
**caractérisée en ce que**
la lèvre d'étanchéité (22) est montée pivotante autour d'un axe parallèle au longeron (10).

10. Caisse bâchée selon l'une des revendications 1 à 9,
**caractérisée en ce que**
la monture de bâche (18), dans une position de déplacement basse du toit (2), vient en prise dans la zone latérale du longeron (10), de préférence entre le longeron (10) et la garniture d'étanchéité (22), et y fixe la bâche latérale (6).

11. Caisse bâchée selon l'une des revendications 1 à 10,
**caractérisée en ce que**
l'élément coulissant de montant (16) est maintenu dans le longeron (10) de manière à pouvoir coulisser longitudinalement.

12. Caisse bâchée selon l'une des revendications 1 à 11,
**caractérisée en ce que**
le corps de montant (15) est maintenu au niveau du plancher (8) de la caisse bâchée (1) dans le longeron (10) de manière à pouvoir coulisser longitudinalement.

13. Caisse bâchée selon l'une des revendications 1 à 12,
**caractérisée en ce que**
le toit (2) est positionnable en hauteur sur au moins 50 mm, de préférence au moins 100 mm, par rapport au corps de montant (15) lorsque la paroi latérale (3) est fermée par extension de l'élément coulissant de montant (16).

14. Caisse bâchée selon l'une des revendications 1 à 13,
**caractérisée en ce que**
la bâche latérale (6) latéralement de la monture de bâche (18) possède une bande de bâche (23) qui s'étend dans le sens longitudinal de la bâche latérale (6), de préférence entre la monture de bâche (18) et la lèvre d'étanchéité (22), **en ce que** la bande de bâche (23) est reliée de manière étanche à la bâche latérale (6) dans la zone supérieure et **en ce que** la bande de bâche (23) possède, dans la zone inférieure, une extrémité libre (25) dirigée vers le bas.
